# EUROPEAN PATENT SPECIFICATION

(11) **EP 3 502 478 B1**
(45) Date of publication and mention of the grant of the patent: **16.11.2022**
(21) Application number: 18215102.7
(22) Date of filing: 21.12.2018
(51) Int. Cl.: F04C 29/12, F04C 18/02, F16K 15/16

(54) **METHOD FOR INSPECTING ERRONEOUS/MISSING PART OF DISCHARGE VALVE STRUCTURE, AND DISCHARGE VALVE STRUCTURE**
VERFAHREN ZUM UNTERSUCHEN EINES FEHLERHAFTEN/FEHLENDEN TEILS EINER AUSLASSVENTILSTRUKTUR UND AUSLASSVENTILSTRUKTUR
PROCÉDÉ D'INSPECTION D'UNE PIÈCE ERRONÉE OU MANQUANTE D'UNE STRUCTURE DE SOUPAPE DE REFOULEMENT ET STRUCTURE DE SOUPAPE DE REFOULEMENT

(30) Priority: 21.12.2017 JP 2017245316
(43) Date of publication of application: 26.06.2019
(73) Proprietor: Valeo Japan Co., Ltd., Saitama 360-0193 (JP)
(72) Inventor: DEGUCHI, Hironobu, Saitama-ken, 360-0193 (JP)
(74) Representative: Valeo Systèmes Thermiques

(56) References cited:
- EP-A1- 1 658 981
- JP-A- S5 735 192
- JP-A- 2004 116 413
- JP-A- 2014 167 282
- US-A1- 2002 157 717
- US-A1- 2005 056 329

## Description

### BACKGROUND OF THE INVENTION

### 1. Field of the Invention

The present disclosure relates to a compressor, and particularly to a method for inspecting an erroneous/missing part of a discharge valve structure, and the discharge valve structure.

### 2. Description of the Related Art

A compressor including a discharge valve and a valve retainer at a discharge port of a scroll is disclosed (for example, see Patent Literature 1). In the compressor of Patent Literature 1, the valve retainer has a bolt insertion hole for fixing with a bolt, and the valve retainer itself and the discharge valve can be positioned. Further, the discharge valve has a protrusion insertion hole for fixing a protruding portion of the valve retainer. The fixed scroll is provided with a bolt insertion hole.

A scroll compressor is disclosed in which a protrusion for positioning a discharge valve and a valve retainer is provided on a back surface of an end plate of a fixed scroll and screwed and fixed integrally to the discharge chamber side of the end plate so that the number of processing steps can be reduced (for example, see Patent Literature 2).

A rotary compressor capable of reliably preventing erroneous assembly by making a center line of a parallel portion of an inner peripheral wall portion of a recess of a main bearing eccentric to a straight line connecting a center of a discharge hole and a center of a pedestal rivet hole is disclosed (for example, see Patent Literature 3).

A rotary compressor capable of inspecting erroneous assembling of a discharge valve after assembly of a valve retainer by a valve body front-to-back discrimination mark provided on the discharge valve when the discharge valve and the valve retainer are assembled (for example, see Patent Literature 4).

A rotary compressor capable of preventing erroneous assembly by a shape of a valve retainer is disclosed (for example, see Patent Literature 5).

Patent Literature 1: JP-A-2014-80909
Patent Literature 2: JP-A-2001-329969
Patent Literature 3: JP-A-2008-101503
Patent Literature 4: JP-A-2014-167282
Patent Literature 5: JP-A-2004-116413

However, in Patent Literatures 1 to 5, it is possible to assemble a discharge valve structure without the discharge valve, and it is not possible to detect missing of the discharge valve. In order to check the presence or absence of the discharge valve, it is necessary to add an inspection process such as a camera or a recognition system, and to add a shape which can be confirmed by the camera, the recognition system or the like. Or, measurement of a height of the valve retainer is necessary to confirm the missing of the discharge valve.

A rotary compressor provided with a discharge valve according to the preamble of claim 5 is disclosed in JP 2014-167282 A.

### SUMMARY OF THE INVENTION

An object of the present disclosure is to provide a method for inspecting an erroneous/missing part of a discharge valve structure capable of detecting a missing of a discharge valve by a simple inspection member, and the discharge valve structure.

A method for inspecting an erroneous/missing part of a discharge valve structure according to the present invention is the method for inspecting the erroneous/missing part of the discharge valve structure of a compressor. The discharge valve structure has (1) an assembly structure including: a partition wall partitioning a compression chamber and a discharge chamber of the compressor and having a discharge hole communicating the compression chamber and the discharge chamber; a discharge valve having elasticity and provided so as to open and close the discharge hole on the discharge chamber side of the discharge hole; a valve retainer provided so as to cover the discharge valve and regulating an opening degree of the discharge valve; and a fixing bolt which is inserted through an insertion hole penetrating the valve retainer and an insertion hole penetrating the discharge valve and is screwed into a screw hole provided in the partition wall at a position deviated from a portion covering the discharge hole, and (2) an inspection structure in which the valve retainer has an inspection hole for inserting an inspection member and at least a part or the whole of the discharge valve in a region of the discharge valve corresponding to the inspection hole of the valve retainer is in a state in which the discharge valve is interposed between the inspection hole of the valve retainer and the partition wall when the discharge valve and the valve retainer are fixed on the partition wall.

The presence or absence of the discharge valve is inspected by inserting the inspection member into the inspection hole and by an insertion depth of the inspection member.

In the method for inspecting the erroneous/missing part of the discharge valve structure according to the present invention, the presence or absence of the discharge valve is preferably inspected after completing the assembly structure. Thus, since it is inspected in a state where the partition wall, the discharge valve and the valve retainer are fixed by the fixing bolt, it is possible to more reliably provide the discharge valve structure having a correctly assembled structure.

In the method for inspecting the erroneous/missing part of the discharge valve structure according to the present invention, the partition wall, the discharge valve and the valve retainer of the compressor have positioning holes for determining a mutual positional relationship. An assembly jig provided with a positioning protrusion to be inserted into the positioning holes is prepared. Steps of assembling the assembly structure include: (1) an arrangement step of setting the valve retainer and the discharge valve in the assembly jig so that the positioning protrusion of the assembly jig is inserted into the positioning holes; (2) an assembly step of assembling the assembly jig set with the valve retainer and the discharge valve by inserting the positioning protrusion of the assembly jig into the positioning hole of the partition wall; and (3) an inspection step of inserting the inspection member into the inspection hole. The presence or absence of the discharge valve is preferably inspected in the inspection step. Thus, the discharge valve and the valve retainer can be arranged at appropriate positions.

In the method for inspecting the erroneous/missing part of the discharge valve structure according to the present invention, the partition wall, the discharge valve and the valve retainer of the compressor have positioning holes for determining the mutual positional relationship. A columnar positioning pin to be inserted into the positioning holes is prepared. The steps of assembling the assembly structure include: a pin setting step of inserting one end of the positioning pin into the positioning hole of the partition wall; an arrangement step of inserting the other end of the positioning pin projecting from the partition wall into the positioning holes of the discharge valve and the valve retainer; and an inspection step of inserting the inspection member into the inspection hole. The presence or absence of the discharge valve is preferably inspected in the inspection step. Thus, the discharge valve and the valve retainer can be arranged at appropriate positions.

A discharge valve structure according to the present invention is defined in claim 5.

The discharge valve structure according to the present invention includes a form in which the inspection hole is an insertion hole for an inspection member.

In the discharge valve structure according to the present invention, the partition wall preferably has a recess in a region corresponding to the inspection hole. Thus, since a difference in an insertion depth of the inspection member due to the presence or absence of the discharge valve becomes larger, it is possible to more reliably detect the absence of the discharge valve.

In the discharge valve structure according to the present invention, the recess preferably has a corresponding region larger than the inspection hole. Thus, since the inspection member more reliably enters into the recess when the discharge valve is absent, it is possible to more reliably detect the absence of the discharge valve.

According to the present disclosure, it is possible to provide a method for inspecting an erroneous/missing part of a discharge valve structure capable of detecting missing of a discharge valve by a simple inspection member, and the discharge valve structure.

### BRIEF DESCRIPTION OF THE DRAWINGS

Fig. 1 is a perspective view showing an example of a discharge valve structure according to the present embodiment;
Fig. 2 is a plan view of the discharge valve structure of Fig. 1;
Fig. 3 is a cross-sectional view taken along a line A-A in Fig. 2;
Fig. 4 is an enlarged view of a portion B in Fig. 3;
Fig. 5 is a perspective view showing a state in which a valve retainer and a discharge valve are set in an assembly jig;
Fig. 6 is a perspective view of a state of Fig. 5 as viewed from another angle;
Fig. 7 is a perspective view for explaining an example of a method for inspecting an erroneous/missing part using the assembly jig;
Fig. 8 is a plan view of the discharge valve structure of Fig. 7;
Fig. 9 is a cross-sectional view taken along a line C-C in Fig. 8;
Fig. 10 is an enlarged view of a portion D in Fig. 9;
Fig. 11 is a perspective view for explaining another example of the method for inspecting the erroneous/missing part using a positioning pin;
Fig. 12 is a plan view of the discharge valve structure of Fig. 11;
Fig. 13 is a cross-sectional view taken along a line E-E in Fig. 12;
Fig. 14 is an enlarged view of a portion F in Fig. 13; and
Fig. 15 is a modification of the cross-sectional view taken along the line A-A in Fig. 2.

### DESCRIPTION OF THE PREFERRED EMBODIMENTS

One mode of the present invention will be described below with reference to the accompanying drawings. Embodiments described below are examples of the present invention, and the present invention is not limited to the following embodiments . It is to be noted that constituent elements having the same reference numerals in the present specification and the drawings indicate mutually the same elements.

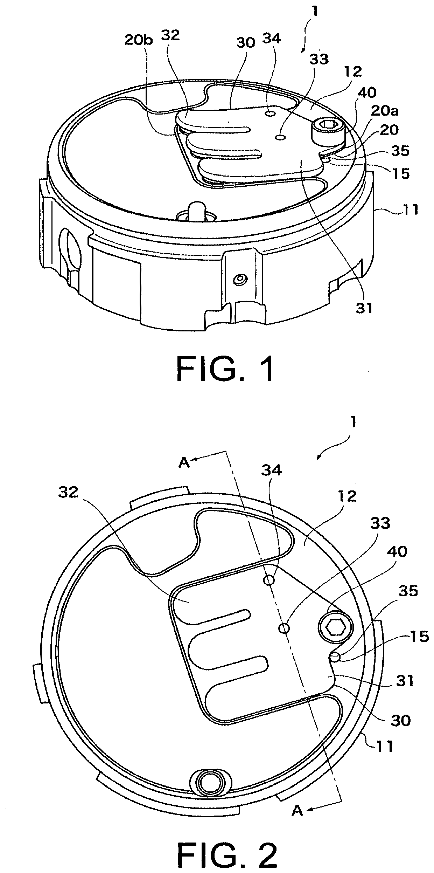

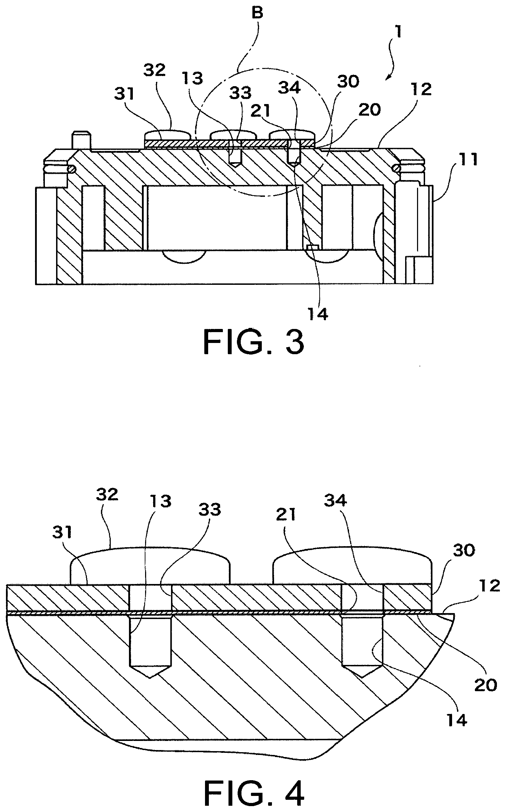

Fig. 1 is a perspective view showing an example of a discharge valve structure according to the present embodiment. Fig. 2 is a plan view of the discharge valve structure of Fig. 1. Fig. 3 is a cross-sectional view taken along a line A-A in Fig. 2. Fig. 4 is an enlarged view of a portion B in Fig. 3. A discharge valve structure 1 according to the present embodiment will be described with reference to Fig. 1 to Fig. 4.

As shown in Figs. 1 to 4, the discharge valve structure 1 according to the present embodiment includes: a partition wall 12 partitioning a compression chamber and a discharge chamber of a compressor and provided with a discharge hole communicating the compression chamber and the discharge chamber; a discharge valve 20 having elasticity and provided so as to open and close the discharge hole on the discharge chamber side of the discharge hole; a valve retainer 30 provided so as to cover the discharge valve 20 and regulating an opening degree of the discharge valve 20; and a fixing bolt 40 which is inserted through an insertion hole penetrating the valve retainer 30 and an insertion hole penetrating the discharge valve 20 and is screwed into a screw hole provided in the partition wall 12 at a position deviated from a portion covering the discharge hole. The valve retainer 30 has an inspection hole 33 separately from the insertion hole for the fixing bolt 40, and at least a part or the whole of the discharge valve 20 enters a region of the discharge valve 20 corresponding to the inspection hole 33 of the valve retainer 30.

The compressor is, for example, a scroll compressor, a rotary compressor or a piston compressor. In Figs. 1 to 4, the discharge valve structure of the scroll compressor is shown as an example, however, the present invention is not limited thereto.

The partition wall 12 is a wall which divides the compression chamber and the discharge chamber, and has a discharge hole (not shown) . The compression chamber is a space for compressing a refrigerant, in an internal space of the compressor. The discharge chamber is a space into which the refrigerant compressed in the compression chamber flows, in the internal space of the compressor. The discharge hole is a passage for the refrigerant which communicates the compression chamber and the discharge chamber. For example, when the compressor is the scroll compressor as shown in Figs. 1 to 4, the partition wall 12 is an end plate of a fixed scroll 11. Further, when the compressor is a rolling piston type rotary compressor, the partition wall 12 is a side plate forming a main bearing of a sealed container. When the compressor is a slide vane type rotary compressor, the partition wall 12 is a cylinder block. When the compressor is a piston compressor, the partition wall 12 is a valve plate.

The partition wall 12 has a screw hole (not shown) for fastening the fixing bolt 40. The screw hole is preferably a dent provided on a surface of the partition wall 12.

The discharge valve 20 is disposed to cover an opening on the discharge chamber side of the discharge hole. The discharge valve 20 is a check valve which prevents the refrigerant from flowing backward from the discharge chamber to the compression chamber with setting a flow of the refrigerant in one direction from the compression chamber to the discharge chamber. As shown in Fig. 1, the discharge valve 20 is preferably a plate-shaped reed valve having one end as a fixed end 20a and the other end as a free end 20b.

The discharge valve 20 has an insertion hole (not shown) penetrating in a plate thickness direction of the discharge valve 20 at a position deviated from a portion covering the discharge hole. The insertion hole is an insertion hole for the fixing bolt 40. The insertion hole for the fixing bolt 40 is preferably provided in a portion in close contact with the partition wall 12 when the discharge valve 20 is open.

As shown in Figs. 1 to 4, the valve retainer 30 is a plate-like member having a flat portion 31 and a curved portion 32 connected to the flat portion 31. The flat portion 31 covers the portion in close contact with the partition wall 12 when the discharge valve 20 is open, of a surface of the discharge valve 20. The curved portion 32 covers a portion away from the partition wall 12 when the discharge valve 20 is open, of the surface of the discharge valve 20. A lifting height, that is, the opening degree of the discharge valve 20 is regulated depending on a degree of curvature of the curved portion 32.

The valve retainer 30 has an insertion hole (not shown) penetrating in a plate thickness direction of the valve retainer 30 at a position corresponding to the insertion hole for the fixing bolt 40 of the discharge valve 20. The insertion hole is an insertion hole for the fixing bolt 40. The insertion hole for the fixing bolt 40 is preferably provided in the flat portion 31.

The fixing bolt 40 is a fastening member for fixing the valve retainer 30 and the discharge valve 20 to the partition wall 12.

The discharge valve structure 1 has an assembly structure including the partition wall 12, the discharge valve 20, the valve retainer 30, and the fixing bolt 40. In the assembly structure, the discharge valve 20 and the valve retainer 30 are overlapped and fixed to the partition wall 12 by one fixing bolt 40.

The discharge valve structure 1 has an inspection structure in which the valve retainer 30 has the inspection hole 33, and at least a part or the whole of the discharge valve 20 enters the region of the discharge valve 20 corresponding to the inspection hole 33.

The inspection hole 33 is a through-hole penetrating in the thickness direction of the valve retainer 30 and is a hole different from the insertion hole for the fixing bolt 40. As shown in Fig. 1 or Fig. 2, the inspection hole 33 is provided in the flat portion 31.

The discharge valve structure 1 according to the present embodiment includes a form in which the inspection hole 33 is an insertion hole for an inspection member. The inspection member may have any shape as long as it can be inserted into the inspection hole 33, and is, for example, needle-like or bar-like.

The fact that at least a part or the whole of the discharge valve 20 enters the region of the discharge valve 20 corresponding to the inspection hole 33 of the valve retainer 30 means a state in which the discharge valve 20 is interposed between the inspection hole 33 of the valve retainer 30 and the partition wall 12 when the discharge valve 20 and the valve retainer 30 are fixed on the partition wall 12. The state includes, for example, a mode in which the discharge valve 20 does not have a hole of a size allowing the inspection member to enter the region corresponding to the inspection hole 33 or a mode in which the discharge valve 20 has a hole of a size not allowing the inspection member to enter the region corresponding to the inspection hole 33.

It is preferred that the discharge valve 20 does not have irregularities in the region of the discharge valve 20 corresponding to the inspection hole 33 of the valve retainer 30. Thus, since the inspection member does not hit the irregularities when the inspection member is inserted into the inspection hole 33 of the valve retainer 30, it is possible to more reliably check an error or an absence of the discharge valve 20.

In the discharge valve structure 1 according to the present embodiment, as shown in Fig. 3 or Fig. 4, the partition wall 12 preferably has a recess 13 in a region corresponding to the inspection hole 33. Thus, since a difference in an insertion depth of the inspection member due to the presence or absence of the discharge valve 20 becomes larger, it is possible to more reliably detect the absence of the discharge valve 20.

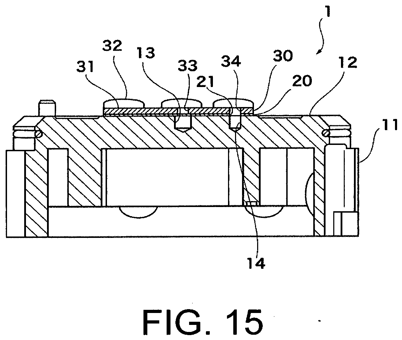

Fig. 15 is a modification of the cross-sectional view taken along the line A-A in Fig. 2. In the discharge valve structure 1 according to the present embodiment, as shown in Fig. 15, it is preferred that a corresponding region of the recess 13 is larger than the inspection hole 33. Thus, since the inspection member reliably enters the recess 13 when the discharge valve 20 is absent, it is possible to more reliably detect the absence of the discharge valve 20.

As shown in Fig. 3 or Fig. 4, it is preferred that the partition wall 12, the discharge valve 20, and the valve retainer 30 respectively have positioning holes 14, 21, 34 for determining a mutual positional relationship.

The positioning hole 14 provided in the partition wall 12 is preferably a dent provided on the surface of the partition wall 12. Here, the dent means a hole which does not penetrate. Further, the positioning hole 14 may be a hole different from the screw hole for fastening the fixing bolt 40, or may be the same hole as the screw hole for fastening the fixing bolt 40.

The positioning hole 21 provided in the discharge valve 20 is a through-hole penetrating in the plate thickness direction of the discharge valve 20. The positioning hole 21 is preferably provided in the portion in close contact with the partition wall 12 when the discharge valve 20 is open. Further, the positioning hole 21 may be a hole different from the insertion hole for the fixing bolt 40, or may be the same hole as the insertion hole for the fixing bolt 40.

The positioning hole 34 provided in the valve retainer 30 is a through-hole penetrating in the plate thickness direction of the valve retainer 30. The positioning hole 34 is preferably provided in the flat portion 31. The positioning hole 34 is a hole different from the inspection hole 33. Further, the positioning hole 34 may be a hole different from the insertion hole for the fixing bolt 40, or may be the same hole as the insertion hole for the fixing bolt 40.

Next, a method for inspecting an erroneous/missing part of the discharge valve structure will be described.

The method for inspecting the erroneous/missing part of the discharge valve structure according to the present embodiment is the method for inspecting the erroneous/ missing part of the discharge valve structure 1 of the compressor. As shown in Figs. 1 to 4, the discharge valve structure 1 has (1) an assembly structure including: the partition wall 12 partitioning a compression chamber and a discharge chamber of the compressor and having a discharge hole communicating the compression chamber and the discharge chamber; the discharge valve 20 having elasticity and provided so as to open and close the discharge hole on the discharge chamber side of the discharge hole; the valve retainer 30 provided so as to cover the discharge valve 20 and regulating an opening degree of the discharge valve 20; and the fixing bolt 40 which is inserted through an insertion hole penetrating the valve retainer 30 and an insertion hole penetrating the discharge valve 20 and is screwed into a screw hole provided in the partition wall 12 at a position deviated from a portion covering the discharge hole, and (2) an inspection structure in which the valve retainer 30 has the inspection hole 33 for inserting an inspection member and at least a part or the whole of the discharge valve 20 enters a region of the discharge valve 20 corresponding to the inspection hole 33. The presence or absence of the discharge valve 20 is inspected by inserting the inspection member (not shown) into the inspection hole 33 and by the insertion depth of the inspection member.

The discharge valve structure according to the present embodiment has the inspection structure. Thus, in the discharge valve structure 1, as shown in Fig. 4, the discharge valve 20 is interposed between the inspection hole 33 and the partition wall 12. Therefore, with the discharge valve 20, when a tip end of the inspection member is inserted into the inspection hole 33, the inspection member finally contacts the discharge valve 20, and the insertion depth is equal to a thickness of the valve retainer 30. In contrast, without the discharge valve 20, when the tip end of the inspection member is inserted into the inspection hole 33, the inspection member reaches the partition wall 12 or is inserted into the recess 13 if the recess 13 is present in the partition wall 12, and thus the insertion depth is deeper than the thickness of the valve retainer 30. Thus, it is possible to detect the presence or absence of the discharge valve 20 by a relative difference in the insertion depth.

Further, the method for inspecting the erroneous/ missing part of the discharge valve structure according to the present embodiment can also detect erroneous assembly of the discharge valve structure. More specifically, as shown in Figs. 1 to 4, in the discharge valve structure, the discharge valve 20 and the valve retainer 30 should be sequentially arranged in this order from the partition wall 12 side, however, it is assumed that the valve retainer 30 and the discharge valve 20 have been sequentially arranged in this order from the partition wall 12 side. In this case, the inspection member contacts the discharge valve 20, and the insertion depth of the inspection member is less than the thickness of the valve retainer 30. Thus, the erroneous assembly can be detected.

In the method of inspecting the erroneous/missing part of the discharge valve structure 1 according to the present embodiment, it is preferable to inspect the presence or absence of the discharge valve 20 after completing the assembly structure. Thus, since the presence or absence of the discharge valve 20 is inspected while the discharge valve 20 and the valve retainer 30 are fixed to the partition wall 12 by the fixing bolt 40, it is possible to more reliably provide the discharge valve structure having a correctly assembled structure.

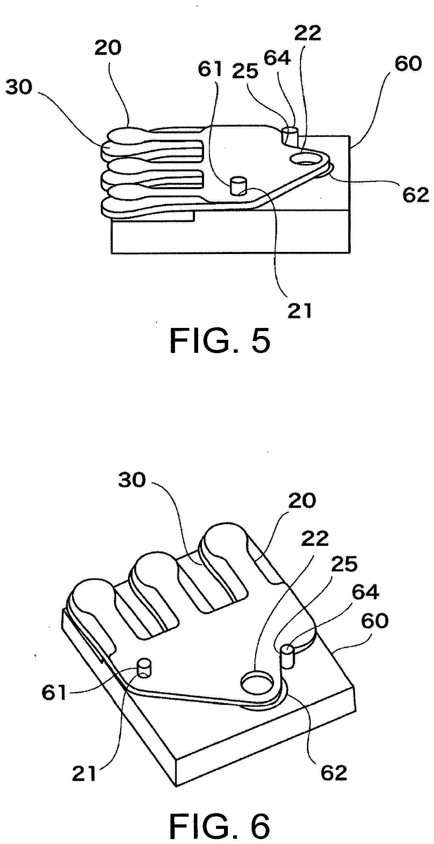

Next, an example of a method for inspecting an erroneous/missing part using an assembly jig will be described with reference to Figs. 5 to 10.

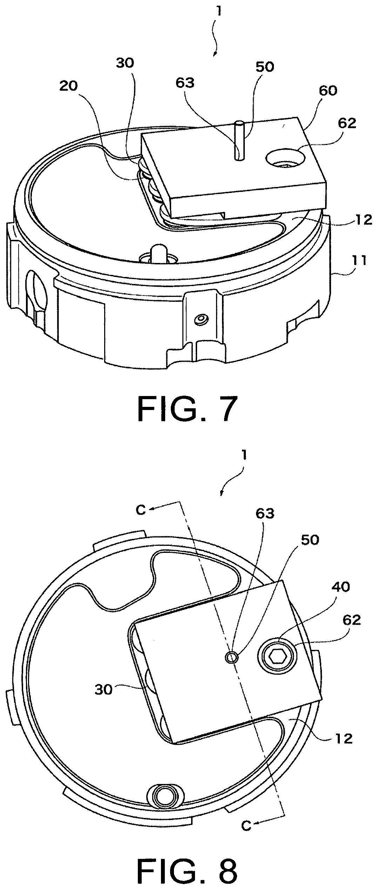

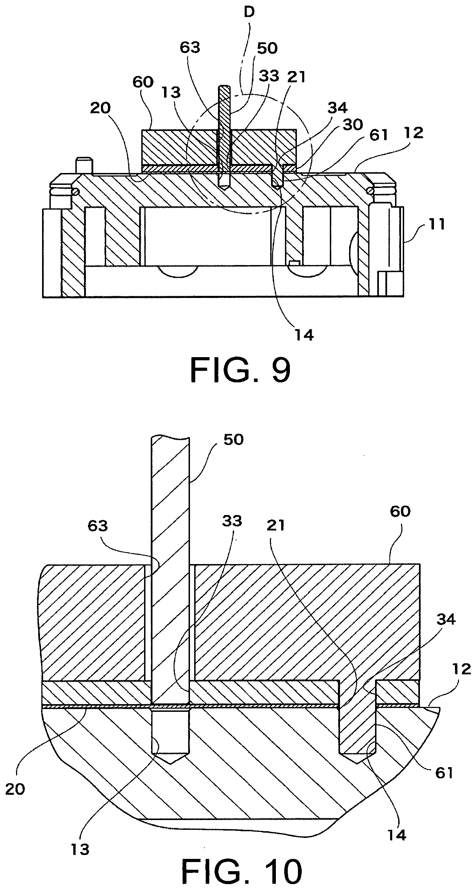

In the method of inspecting the erroneous/missing part of the discharge valve structure 1 according to the present embodiment, the partition wall 12, the discharge valve 20 and the valve retainer 30 of the compressor have the positioning holes 14, 21, 34 (shown in Fig. 3 or Fig. 4) for determining the mutual positional relationship. As shown in Fig. 5 or Fig. 6, an assembly jig 60 provided with a positioning protrusion 61 to be inserted into the positioning holes 14, 21, 34 is prepared. Steps of assembling the assembly structure include: (1) an arrangement step of setting the valve retainer 30 and the discharge valve 20 in the assembly jig 60 so that the positioning protrusion 61 of the assembly jig 60 is inserted into the positioning holes 21, 34; (2) an assembly step of assembling the assembly jig 60 set with the valve retainer 30 and the discharge valve 20 by inserting the positioning protrusion 61 of the assembly jig 60 into the positioning hole 14 (shown in Fig. 9 or Fig. 10) of the partition wall 12 as shown in Fig. 7 to Fig. 10; and (3) an inspection step of inserting an inspection member 50 into inspection holes 63, 33. The presence or absence of the discharge valve 20 is preferably inspected in the inspection step.

As shown in Fig. 5 or Fig. 6, the assembly jig 60 is a member having the positioning protrusion 61 protruding from one surface thereof. A shape of the positioning protrusion 61 is not particularly limited as long as it can be inserted into the positioning holes 14, 21, 34.

It is preferred that the assembly jig 60 does not cover the insertion hole of the valve retainer 30 for the fixing bolt 40 and an insertion hole 22 (shown in Fig. 5 or Fig. 6) for the fixing bolt 40 of the discharge valve 20. In such a form, for example as shown in Fig. 5 to Fig. 8, the assembly jig 60 may have a hole 62 for fastening the fixing bolt 40 at a position corresponding to the insertion hole of the valve retainer 30 for the fixing bolt 40 and the insertion hole 22 (shown in Fig. 5 or Fig. 6) for the fixing bolt 40 of the discharge valve 20, or the assembly jig 60 may have a cutout (not shown) at the position corresponding to the insertion hole of the valve retainer 30 for the fixing bolt 40 and the insertion hole 22 (shown in Fig. 5 or Fig. 6) for the fixing bolt 40 of the discharge valve 20.

As shown in Fig. 7 or Fig. 8, the assembly jig 60 preferably has the inspection hole 63 at a position corresponding to the inspection hole 33 of the valve retainer 30.

In the arrangement step, the positioning protrusion 61 is inserted into the positioning holes 21, 34, so that the valve retainer 30 and the discharge valve 20 are sequentially overlapped and set from the assembly jig 60 side.

In the assembly step, the assembly jig 60 with the valve retainer 30 and the discharge valve 20 set thereon is turned over from a state shown in Fig. 5 or Fig. 6, and placed on the partition wall 12 as shown in Fig. 7 to Fig. 10, and the positioning protrusion 61 of the assembly jig 60 is inserted into the positioning hole 14 (shown in Fig. 9 or Fig. 10) of the partition wall 12.

In the steps of assembling the assembly structure, it is preferable to perform a step of fastening and fixing the valve retainer 30 and the discharge valve 20 to the partition wall 12 by the fixing bolt 40 with respect to a product whose inspection result is good after the inspection step. Thus, since only a good product has the fixing bolt 40, it is possible to more reliably eliminate a defective product in which the absence or the erroneous assembly of the discharge valve 20 has been detected. Further, it is possible to more quickly arrange or reassemble the discharge valve 20 for the defective product.

In the inspection step, it is preferred that the inspection member 50 is inserted from the inspection hole 63 of the assembly jig 60 while the assembly jig 60 is combined with the partition wall 12. In the inspection step, it is preferable to perform the step of removing the assembly jig 60 after it is confirmed that the assembly of the discharge valve structure 1 is correct.

In the method of inspecting the erroneous/missing part of the discharge valve structure 1 according to the present embodiment, as shown in Fig. 1, Fig. 2, Fig. 5 or Fig. 6, it is preferred that the discharge valve 20 and the valve retainer 30 respectively have positioning cutout portions 25 (shown in Fig. 5 and Fig. 6) and 35 (shown in Fig. 1 and Fig. 2), and the partition wall 12 has a positioning hole 15 at a position corresponding to the cutout portions 25 and 35. Further, as shown in Fig. 5 and Fig. 6, it is preferred that the assembly jig 60 has a positioning protrusion 64 to be inserted into the positioning hole 15. It is preferred that the arrangement step further includes a step of setting the valve retainer 30 and the discharge valve 20 in the assembly jig 60 so that the positioning protrusion 64 of the assembly jig 60 is engaged with the positioning cutout portions 25 and 35, and the assembly step further includes a step of inserting the positioning protrusion 64 of the assembly jig 60 into the positioning hole 15 (shown in Fig. 1 or Fig. 2) of the partition wall 12 to combine the assembly jig 60 in which the valve retainer 30 and the discharge valve 20 are set. The discharge valve 20 and the valve retainer 30 can be positioned more accurately by positioning with the two positioning protrusions 61 and 64.

Further, in the method of inspecting the erroneous/ missing part of the discharge valve structure 1 according to the present embodiment, in addition to the insertion of the positioning protrusion 61 into the positioning holes 14, 32, 34, the positioning may be performed by inserting the fixing bolt 40 into the insertion hole 22 (shown in Fig. 5 and Fig. 6) for the fixing bolt of the discharge valve 20, the insertion hole (not shown) of the valve retainer 30 for the fixing bolt, and the screw hole (not shown) for fastening the fixing bolt 40. The discharge valve 20 and the valve retainer 30 can be positioned more accurately by positioning at two positions of the positioning protrusion 61 and the fixing bolt 40.

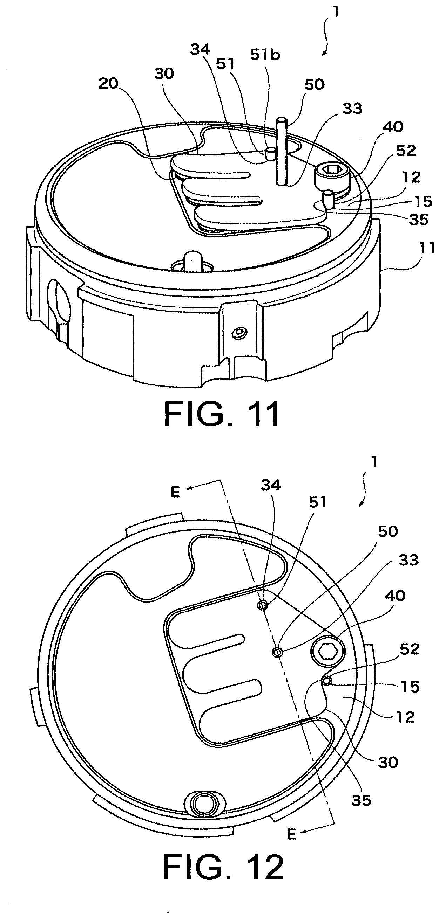

Next, another example of the method for inspecting the erroneous/missing part using a positioning pin will be described with reference to Fig. 11 to Fig. 14.

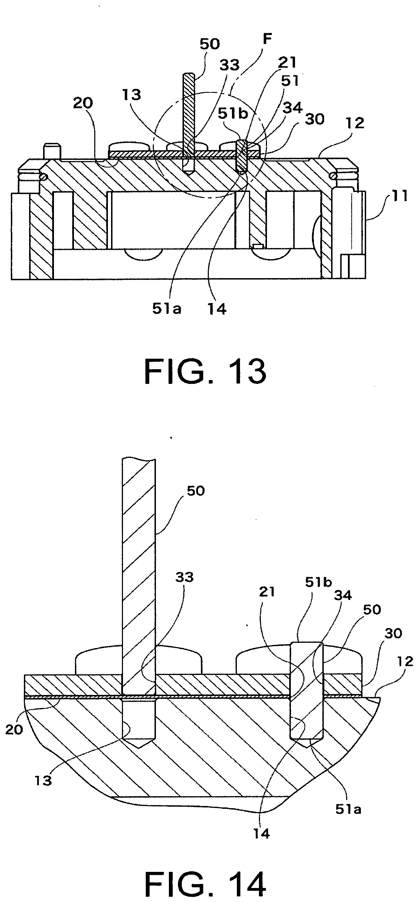

In the method of inspecting the erroneous/missing part of the discharge valve structure 1 according to the present embodiment, it is preferred that the partition wall 12, the discharge valve 20 and the valve retainer 30 of the compressor have the positioning holes 14, 21, 34 (shown in Fig. 3 or Fig. 4) for determining a mutual positional relationship, and a columnar positioning pin 51 to be inserted into the positioning holes 14, 21, 34 is prepared. As shown in Fig. 11 to Fig. 14, it is preferred that steps of assembling the assembly structure include: a pin setting step of inserting one end 51a (shown in Fig. 13 or Fig. 14) of the positioning pin 51 into the positioning hole 14 of the partition wall 12; an arrangement step of inserting the other end 51b of the positioning pin 51 projecting from the partition wall 12 into the positioning holes 21 and 34 of the discharge valve 20 and the valve retainer 30; and an inspection step of inserting the inspection member 50 into the inspection hole 33. The presence or absence of the discharge valve 20 is preferably inspected in the inspection step.

The positioning pin 51 is preferably a columnar member. Since the positioning pin 51 is in a columnar shape, the positioning hole 14 to be inserted by the pin can be formed more easily than other shapes, and it is possible to easily produce the pin 51 corresponding to the positioning hole.

A diameter of the positioning pin 51 is preferably 99 to 100% of that of the positioning hole 14 of the partition wall 12, and more preferably 99.3 to 99.5%. This makes it possible to prevent the positioning pin 51 from wobbling, so that the positioning pin 51 can be more reliably set in the pin setting step.

The diameter of the positioning pin 51 is preferably 95 to 98% of that of the positioning hole 21 of the discharge valve 20, and more preferably 96 to 97%. The diameter of the positioning pin 51 is preferably 95 to 98% of that of the positioning hole 34 of the valve retainer 30, and more preferably 96 to 97%. This makes it possible to arrange the discharge valve 20 and the valve retainer 30 more reliably in the arrangement step.

In the steps of assembling the assembly structure, it is preferable to perform a step of fastening and fixing the valve retainer 30 and the discharge valve 20 to the partition wall 12 by the fixing bolt 40 with respect to the product whose inspection result is good after the inspection step. Thus, since only the good product has the fixing bolt 40, it is possible to more reliably eliminate the defective product in which the absence or the erroneous assembly of the discharge valve 20 has been detected. Further, it is possible to more quickly arrange or reassemble the discharge valve 20 for the defective product.

A step of removing the positioning pin 51 is preferably performed after the step of fastening and fixing by the fixing bolt 40.

In the method of inspecting the erroneous/missing part of the discharge valve structure 1 according to the present embodiment, as shown in Fig. 11 and Fig. 12, it is preferred that the discharge valve 20 and the valve retainer 30 have the positioning cutout portion 35, and the partition wall 12 has the positioning hole 15 at a position corresponding to the cutout portion 35. Then, it is preferred that a columnar positioning pin 52 to be inserted into the positioning hole 15 is prepared, and as shown in Fig. 11 and Fig. 12, the pin setting step further includes a step of inserting the positioning pin 52 into the positioning hole 15 of the partition wall 12, and the arrangement step further includes a step of engaging the cutout portions 35 of the discharge valve 20 and the valve retainer 30 with the positioning pin 51 protruding from the partition wall 12. The discharge valve 20 and the valve retainer 30 can be positioned more accurately by positioning with the two positioning pins 51 and 52.

Further, in the method of inspecting the erroneous/ missing part of the discharge valve structure 1 according to the present embodiment, in addition to the insertion of the positioning pin 51 into the positioning holes 14, 32, 34, the positioning may be performed by inserting the fixing bolt 40 into the insertion hole of the discharge valve 20 for the fixing bolt, the insertion hole of the valve retainer 30 for the fixing bolt, and the screw hole for fastening the fixing bolt 40. The discharge valve 20 and the valve retainer 30 can be positioned more accurately by positioning at two positions of the positioning pin 51 and the fixing bolt 40.

In the method of inspecting the erroneous/missing part according to the present embodiment, a jig plate (not shown) provided with an outline hole corresponding to an outline of the valve retainer 30 and the discharge valve 20 is prepared. The steps of assembling the assembly structure include: a jig setting step of setting the jig plate at a predetermined position on the partition wall 12; an arrangement step of placing the discharge valve 20 and the valve retainer 30 on the partition wall 12 with the outline hole of the jig plate as a guide, and an inspection step of inserting the inspecting member 50 into the inspection hole 33. The method of inspecting the erroneous/missing part includes a mode in which the presence or absence of the discharge valve 20 is inspected in the inspection step. In this mode, the discharge valve 20 and the valve retainer 30 can be positioned by being fitted in the outline hole of the jig plate, for example, without using the assembly jig 60 as shown in Fig. 5 to Fig. 10 or the positioning pin 51 as shown in Fig. 11 to Fig. 14.

### Description of Reference Numerals and Signs

1: discharge valve structure
11: fixed scroll
12: partition wall
13: recess
14, 15: positioning hole
20: discharge valve
20a: fixed end
20b: free end
21: positioning hole
22: insertion hole for fixing bolt
25: cutout portion
30: valve retainer
31: flat portion
32: curved portion
33: inspection hole
34: positioning hole
35: cutout portion
40: fixing bolt
50: inspection member
51, 52: positioning pin
51a: one end of positioning pin
51b: the other end of positioning pin
60: assembly jig
61, 64: positioning protrusion
62: hole for fastening fixing bolt
63: inspection hole.

## Claims

1. A method for inspecting an erroneous/missing part of a discharge valve structure (1) of a compressor, **characterized in that**
the discharge valve structure (1) has
<1> an assembly structure comprising:
a partition wall (12) partitioning a compression chamber and a discharge chamber of the compressor and having a discharge hole communicating the compression chamber and the discharge chamber;
a discharge valve (20) having elasticity and provided so as to open and close the discharge hole on the discharge chamber side of the discharge hole;
a valve retainer (30) provided so as to cover the discharge valve (20) and regulating an opening degree of the discharge valve (20); and
a fixing bolt (40) which is inserted through an insertion hole penetrating the valve retainer (30) and an insertion hole penetrating the discharge valve (20) and is screwed into a screw hole provided in the partition wall (12) at a position deviated from a portion covering the discharge hole, and
<2> an inspection structure in which the valve retainer (30) has an inspection hole (33) for inserting an inspection member (50) and at least a part or the whole of the discharge valve (20) in a region of the discharge valve (20) corresponding to the inspection hole (33) of the valve retainer (30) is in a state in which the discharge valve (20) is interposed between the inspection hole (33) of the valve retainer (30) and the partition wall (12) when the discharge valve (20) and the valve retainer (30) are fixed on the partition wall (12), and
the presence or absence of the discharge valve (20) is inspected by inserting the inspection member (50) into the inspection hole (33) and by an insertion depth of the inspection member (50).

2. The method for inspecting the erroneous/missing part of the discharge valve structure according to claim 1, **characterized in that** the presence or absence of the discharge valve (20) is inspected after completing the assembly structure.

3. The method for inspecting the erroneous/missing part of the discharge valve structure according to claim 1, **characterized in that**
the partition wall (12), the discharge valve (20) and the valve retainer (30) of the compressor have positioning holes (14, 21, 34) for determining a mutual positional relationship,
an assembly jig (60) provided with a positioning protrusion (61) to be inserted into the positioning holes (14, 21, 34) is prepared,
steps of assembling the assembly structure comprise:
<1> an arrangement step of setting the valve retainer (30) and the discharge valve (20) in the assembly jig (60) so that the positioning protrusion (61) of the assembly jig (60) is inserted into the positioning holes (21, 34);
<2> an assembly step of assembling the assembly jig (60) set with the valve retainer (30) and the discharge valve (20) by inserting the positioning protrusion (61) of the assembly jig (60) into the positioning hole (14) of the partition wall (12); and
<3> an inspection step of inserting the inspection member (50) into the inspection hole (33), and
the presence or absence of the discharge valve (20) is inspected in the inspection step.

4. The method for inspecting the erroneous/missing part of the discharge valve structure according to claim 1, **characterized in that**
the partition wall (12), the discharge valve (20) and the valve retainer (30) of the compressor have positioning holes (14, 21, 34) for determining a mutual positional relationship,
a columnar positioning pin (51) to be inserted into the positioning holes (14, 21, 34) is prepared,
steps of assembling the assembly structure comprise:
a pin setting step of inserting one end (51a) of the positioning pin (51) into the positioning hole (14) of the partition wall (12);
an arrangement step of inserting the other end (51b) of the positioning pin (51) projecting from the partition wall (12) into the positioning holes (21, 34) of the discharge valve (20) and the valve retainer (30); and
an inspection step of inserting the inspection member (50) into the inspection hole (33), and
the presence or absence of the discharge valve (20) is inspected in the inspection step.

5. A discharge valve structure comprising:
a partition wall (12) partitioning a compression chamber and a discharge chamber of a compressor and provided with a discharge hole communicating the compression chamber and the discharge chamber;
a discharge valve (20) having elasticity and provided so as to open and close the discharge hole on the discharge chamber side of the discharge hole;
a valve retainer (30) provided so as to cover the discharge valve (20) and regulating an opening degree of the discharge valve (20); and
at least a part or the whole of the discharge valve (20) in a region of the discharge valve (20) corresponding to an inspection hole (33) of the valve retainer (30) is in a state in which the discharge valve (20) is interposed between the inspection hole (33) of the valve retainer (30) and the partition wall (12) when the discharge valve (20) and the valve retainer (30) are fixed on the partition wall (12),
the valve retainer 30 is a plate-like member having a flat portion 31 and a curved portion 32 connected to the flat portion 31, and the flat portion 31 covers the portion in close contact with the partition wall 12 when the discharge valve 20 is open, of a surface of the discharge valve 20, and the curved portion 32 covers a portion away from the partition wall 12 when the discharge valve 20 is open, of the surface of the discharge valve 20, and
an inspection structure in which the valve retainer (30) has an inspection hole (33) for inserting an inspection member (50) and at least a part or the whole of the discharge valve (20) enters a region of the discharge valve (20) corresponding to the inspection hole (33)
**characterized in that** a fixing bolt (40) which is inserted through an insertion hole penetrating the valve retainer (30) and an insertion hole penetrating the discharge valve (20) and is screwed into a screw hole provided in the partition wall (12) at a position deviated from a portion covering the discharge hole,
and **in that** the valve retainer (30) has an inspection hole (33) separately from the insertion hole for the fixing bolt (40), and **in that** the inspection hole 22 is provided in the flat portion 31.

6. The discharge valve structure according to claim 5, **characterized in that** the inspection hole (33) is an insertion hole for an inspection member (50).

7. The discharge valve structure according to claim 5 or 6, **characterized in that** the partition wall (12) has a recess (13) in a region corresponding to the inspection hole (33).

8. The discharge valve structure according to any one of claims 5 to 7, **characterized in that** the recess (13) has a corresponding region larger than the inspection hole (33).

## Patentansprüche

1. Verfahren zum Kontrollieren einer fehlerhaften/fehlenden Komponente einer Auslassventilstruktur (1) eines Verdichters, **dadurch gekennzeichnet, dass**
die Auslassventilstruktur (1) aufweist:
<1> eine Montagestruktur, die umfasst:
eine Trennwand (12), die eine Verdichtungskammer und eine Auslasskammer des Verdichters trennt und eine Auslassöffnung aufweist, die die Verdichtungskammer und die Auslasskammer verbindet;
ein Auslassventil (20), das Elastizität aufweist und derart bereitgestellt ist, dass es die Auslassöffnung an der Auslasskammerseite der Auslassöffnung öffnet und schließt;
eine Ventilhalterung (30), die derart bereitgestellt ist, dass sie die Auslassöffnung (20) bedeckt, und einen Öffnungsgrad des Auslassventils (20) regelt; und
eine Befestigungsschraube (40), die durch eine Einsetzöffnung, die die Ventilhalterung (30) penetriert, und eine Einsetzöffnung, die das Auslassventil (20) penetriert, eingesetzt wird und in eine Schraubenöffnung geschraubt wird, die in der Trennwand (12) an einer Position bereitgestellt ist, die von einem die Auslassöffnung bedeckenden Abschnitt abweicht, und
<2> eine Kontrollstruktur, wobei die Ventilhalterung (30) eine Kontrollöffnung (33) zum Einsetzen eines Kontrollelements (50) aufweist und zumindest ein Teil oder die Gesamtheit des Auslassventils (20) in einem Bereich des Auslassventils (20), der der Kontrollöffnung (33) der Ventilhalterung (30) entspricht, in einem Zustand ist, in dem das Auslassventil (20) zwischen der Kontrollöffnung (33) der Ventilhalterung (30) und der Trennwand (12) angeordnet ist, wenn das Auslassventil (20) und die Ventilhalterung (30) an der Trennwand (12) befestigt sind, und
das Vorhandensein oder Fehlen des Auslassventils (20) durch Einsetzen des Kontrollelements (50) in die Kontrollöffnung (33) und durch eine Einsetztiefe des Kontrollelements (50) kontrolliert wird.

2. Verfahren zum Kontrollieren der fehlerhaften/fehlenden Komponente der Auslassventilstruktur nach Anspruch 1, **dadurch gekennzeichnet, dass** das Vorhandensein oder Fehlen des Auslassventils (20) nach Fertigstellen der Montagestruktur kontrolliert wird.

3. Verfahren zum Kontrollieren der fehlerhaften/fehlenden Komponente der Auslassventilstruktur nach Anspruch 1, **dadurch gekennzeichnet, dass**
die Trennwand (12), das Auslassventil (20) und die Ventilhalterung (30) des Verdichters Positionierungsöffnungen (14, 21, 34) zum Bestimmen einer Positionsbeziehung zueinander aufweisen,
eine Montageschablone (60), die mit einem in die Positionierungsöffnungen (14, 21, 34) einzusetzenden Positionierungsvorsprung (61) bereitgestellt ist, vorbereitet wird,
Schritte zum Montieren der Montagestruktur umfassen:
<1> einen Anordnungsschritt zum Einrichten der Ventilhalterung (30) und des Auslassventils (20) in der Montageschablone (60) derart, dass der Positionierungsvorsprung (61) der Montageschablone (60) in die Positionierungsöffnungen (21, 34) eingesetzt wird;
<2> einen Montageschritt zum Montieren der Montageschablone (60), die mit der Ventilhalterung (30) und dem Auslassventil (20) eingerichtet ist, durch Einsetzen des Positionierungsvorsprungs (61) der Montageschablone (60) in die Positionierungsöffnung (14) der Trennwand (12); und
<3> einen Kontrollschritt zum Einsetzen des Kontrollelements (50) in die Kontrollöffnung (33), und
das Vorhandensein oder Fehlen des Auslassventils (20) in dem Kontrollschritt kontrolliert wird.

4. Verfahren zum Kontrollieren der fehlerhaften/fehlenden Komponente der Auslassventilstruktur nach Anspruch 1, **dadurch gekennzeichnet, dass**
die Trennwand (12), das Auslassventil (20) und die Ventilhalterung (30) des Verdichters Positionierungsöffnungen (14, 21, 34) zum Bestimmen einer Positionsbeziehung zueinander aufweisen,
ein in die Positionierungsöffnungen (14, 21, 34) einzusetzender säulenartiger Positionierungsstift (51) vorbereitet wird,
Schritte zum Montieren der Montagestruktur umfassen:
einen Stifteinrichtungsschritt zum Einsetzen eines Endes (51a) des Positionierungsstifts (51) in die Positionierungsöffnung (14) der Trennwand (12);
einen Anordnungsschritt zum Einsetzen des anderen Endes (51b) des Positionierungsstifts (51), das von der Trennwand (12) hervorsteht, in die Positionierungsöffnungen (21, 34) des Auslassventils (20) und der Ventilhalterung (30); und
einen Kontrollschritt zum Einsetzen des Kontrollelements (50) in die Kontrollöffnung (33), und
das Vorhandensein oder Fehlen des Auslassventils (20) in dem Kontrollschritt kontrolliert wird.

5. Auslassventilstruktur, die umfasst:
eine Trennwand (12), die eine Verdichtungskammer und eine Auslasskammer eines Verdichters trennt und mit einer Auslassöffnung bereitgestellt ist, die die Verdichtungskammer und die Auslasskammer verbindet;
ein Auslassventil (20), das Elastizität aufweist und derart bereitgestellt ist, dass es die Auslassöffnung an der Auslasskammerseite der Auslassöffnung öffnet und schließt;
eine Ventilhalterung (30), die derart bereitgestellt ist, dass sie die Auslassöffnung (20) bedeckt, und einen Öffnungsgrad des Auslassventils (20) regelt; und
und zumindest ein Teil oder die Gesamtheit des Auslassventils (20) in einem Bereich des Auslassventils (20), der der Kontrollöffnung (33) der Ventilhalterung (30) entspricht, in einem Zustand ist, in dem das Auslassventil (20) zwischen der Kontrollöffnung (33) der Ventilhalterung (30) und der Trennwand (12) angeordnet ist, wenn das Auslassventil (20) und die Ventilhalterung (30) an der Trennwand (12) befestigt sind, wobei die Ventilhalterung 30 ein plattenartiges Element ist, das einen flachen Abschnitt 31 und einen gebogenen Abschnitt 32 aufweist, der mit dem flachen Abschnitt 31 verbunden ist, und der flache Abschnitt 31 den Abschnitt in engem Kontakt mit der Trennwand 12, wenn das Auslassventil 20 geöffnet ist, einer Oberfläche des Auslassventils 20 bedeckt, und der gebogene Abschnitt 32 einen Abschnitt entfernt von der Trennwand 12, wenn das Auslassventil 20 geöffnet ist, der Oberfläche des Auslassventils 20 bedeckt, und
eine Kontrollstruktur, wobei die Ventilhalterung (30) eine Kontrollöffnung (33) zum Einsetzen eines Kontrollelements (50) aufweist und zumindest ein Teil oder die Gesamtheit des Auslassventils (20) in einen Bereich des Auslassventils (20) eintritt, der der Kontrollöffnung (33) entspricht,
und **dadurch gekennzeichnet, dass** eine Befestigungsschraube (40), die durch eine Einsetzöffnung, die die Ventilhalterung (30) penetriert, und eine Einsetzöffnung, die das Auslassventil (20) penetriert, eingesetzt wird und in eine Schraubenöffnung geschraubt wird, die in der Trennwand (12) an einer Position bereitgestellt ist, die von einem die Auslassöffnung bedeckenden Abschnitt abweicht,
und dass die Ventilhalterung (30) eine Kontrollöffnung (33) aufweist, die von der Einsetzöffnung für die Befestigungsschraube (40) separat ist,
und dass die Kontrollöffnung 22 in dem flachen Abschnitt 31 bereitgestellt ist.

6. Auslassventilstruktur nach Anspruch 5, **dadurch gekennzeichnet, dass** die Kontrollöffnung (33) eine Einsetzöffnung für ein Kontrollelement (50) ist.

7. Auslassventilstruktur nach Anspruch 5 oder 6, **dadurch gekennzeichnet, dass** die Trennwand (12) eine Vertiefung (13) in einem Bereich aufweist, der der Kontrollöffnung (33) entspricht.

8. Auslassventilstruktur nach einem der Ansprüche 5 bis 7, **dadurch gekennzeichnet, dass** die Vertiefung (13) einen entsprechenden Bereich aufweist, der größer als die Kontrollöffnung (33) ist.

## Revendications

1. Procédé d'inspection pour la détection d'une pièce incorrecte/manquante dans une structure de clapet de refoulement (1) d'un compresseur, **caractérisé en ce que**
la structure de clapet de refoulement (1) comporte
<1> un ensemble comprenant :
une paroi de séparation (12) séparant une chambre de compression et une chambre de refoulement du compresseur et comportant un orifice de refoulement mettant la chambre de compression et la chambre de refoulement en communication ;
un clapet de refoulement (20) présentant une certaine élasticité et prévu pour ouvrir et fermer l'orifice de refoulement du côté chambre de refoulement de l'orifice de refoulement ;
un élément de retenue de clapet (30) prévu pour recouvrir le clapet de refoulement (20) et réguler un degré d'ouverture du clapet de refoulement (20) ; et
une vis de fixation (40) qui est insérée à travers un trou d'insertion pénétrant l'élément de retenue de clapet (30) et un trou d'insertion pénétrant le clapet de refoulement (20) et est vissée dans un trou de vis formé dans la paroi de séparation (12) à un emplacement décalé vis-à-vis d'une partie recouvrant l'orifice de refoulement, et
<2> une structure d'inspection dans laquelle l'élément de retenue de clapet (30) comporte un orifice d'inspection (33) pour l'insertion d'un élément d'inspection (50) et au moins une partie ou l'intégralité du clapet de refoulement (20) dans une région du clapet de refoulement (20) correspondant à l'orifice d'inspection (33) de l'élément de retenue de clapet (30) se trouve dans un état dans lequel le clapet de refoulement (20) est interposé entre l'orifice d'inspection (33) de l'élément de retenue de clapet (30) et la paroi de séparation (12) lorsque le clapet de refoulement (20) et l'élément de retenue de clapet (30) sont fixés sur la paroi de séparation (12), et
la présence ou l'absence du clapet de refoulement (20) est déterminée en insérant l'élément d'inspection (50) dans l'orifice d'inspection (33) et en fonction de la profondeur d'insertion de l'élément d'inspection (50).

2. Procédé d'inspection pour la détection d'une pièce incorrecte/manquante dans une structure de clapet de refoulement selon la revendication 1, **caractérisé en ce que** la présence ou l'absence du clapet de refoulement (20) est déterminée une fois l'ensemble assemblé.

3. Procédé d'inspection pour la détection d'une pièce incorrecte/manquante dans une structure de clapet de refoulement selon la revendication 1, caractérisé en ce
la paroi de séparation (12), le clapet de refoulement (20) et l'élément de retenue de clapet (30) du compresseur comportent des orifices de positionnement (14, 21, 34) pour déterminer une relation de position mutuelle,
un gabarit d'assemblage (60) pourvu d'une saillie de positionnement (61) destinée à être insérée dans les trous de positionnement (14, 21, 34) est préparé,
les étapes d'assemblage de l'ensemble comprennent :
<1> une étape de disposition consistant à placer l'élément de retenue de clapet (30) et le clapet de refoulement (20) dans le gabarit d'assemblage (60) de telle sorte que la saillie de positionnement (61) du gabarit d'assemblage (60) soit insérée dans les orifices de positionnement (21, 34) ;
<2> une étape de pose consistant à poser le gabarit d'assemblage (60) comportant l'élément de retenue de clapet (30) et le clapet de refoulement (20) en insérant la saillie de positionnement (61) du gabarit d'assemblage (60) dans l'orifice de positionnement (14) de la paroi de séparation (12) ; et
<3> une étape d'inspection consistant à insérer l'élément d'inspection (50) dans l'orifice d'inspection (33), et
la présence ou l'absence du clapet de refoulement (20) est déterminée lors de l'étape d'inspection.

4. Procédé d'inspection pour la détection d'une pièce incorrecte/manquante dans une structure de clapet de refoulement selon la revendication 1, caractérisé en ce
la paroi de séparation (12), le clapet de refoulement (20) et l'élément de retenue de clapet (30) du compresseur comportent des orifices de positionnement (14, 21, 34) pour déterminer une relation de position mutuelle,
une goupille de positionnement colonnaire (51) destinée à être insérée dans les orifices de positionnement (14, 21, 34) est préparée,
les étapes d'assemblage de l'ensemble comprennent :
une étape de mise en place de goupille consistant à insérer une extrémité (51a) de la goupille de positionnement (51) dans l'orifice de positionnement (14) de la paroi de séparation (12) ;
une étape de disposition consistant à insérer l'autre extrémité (51b) de la goupille de positionnement (51) faisant saillie à partir de la paroi de séparation (12) dans les orifices de positionnement (21, 34) du clapet de refoulement (20) et de l'élément de retenue de clapet (30) ; et
une étape d'inspection consistant à insérer l'élément d'inspection (50) dans l'orifice d'inspection (33), et
la présence ou l'absence du clapet de refoulement (20) est déterminée lors de l'étape d'inspection.

5. Structure de clapet de refoulement comprenant :
une paroi de séparation (12) séparant une chambre de compression et une chambre de refoulement d'un compresseur et pourvue d'un orifice de refoulement mettant la chambre de compression et la chambre de refoulement en communication ;
un clapet de refoulement (20) présentant une certaine élasticité et prévu pour ouvrir et fermer l'orifice de refoulement du côté chambre de refoulement de l'orifice de refoulement ;
un élément de retenue de clapet (30) prévu pour recouvrir le clapet de refoulement (20) et réguler un degré d'ouverture du clapet de refoulement (20) ; et
et au moins une partie ou l'intégralité du clapet de refoulement (20) dans une région du clapet de refoulement (20) correspondant à un orifice d'inspection (33) de l'élément de retenue de clapet (30) se trouve dans un état dans lequel le clapet de refoulement (20) est interposé entre l'orifice d'inspection (33) de l'élément de retenue de clapet (30) et la paroi de séparation (12) lorsque le clapet de refoulement (20) et l'élément de retenue de clapet (30) sont fixés sur la paroi de séparation (12), l'élément de retenue de clapet (30) étant un élément en forme de plaque comportant une partie plate (31) et une partie incurvée (32) reliée à la partie plate (31), et la partie plate (31) recouvrant la partie se trouvant en contact étroit avec la paroi de séparation (12), lorsque le clapet de refoulement (20) est ouvert, d'une surface du clapet de refoulement (20), et la partie incurvée (32) recouvrant une partie éloignée de la paroi de séparation (12), lorsque le clapet de refoulement (20) est ouvert, de la surface du clapet de refoulement (20), et
une structure d'inspection dans laquelle l'élément de retenue de clapet (30) comporte un orifice d'inspection (33) pour l'insertion d'un élément d'inspection (50) et au moins une partie ou l'intégralité du clapet de refoulement (20) pénètre dans une région du clapet de refoulement (20) correspondant à l'orifice d'inspection (33) et
**caractérisée en ce que** une vis de fixation (40) qui est insérée à travers un trou d'insertion pénétrant l'élément de retenue de clapet (30) et un trou d'insertion pénétrant le clapet de refoulement (20) est vissée dans un trou de vis formé dans la paroi de séparation (12) à un emplacement décalé vis-à-vis d'une partie recouvrant l'orifice de refoulement,
**en ce que** l'élément de retenue de clapet (30) comporte un orifice d'inspection (33) séparé de l'orifice d'insertion pour la vis de fixation (40),
et **en ce que** l'orifice d'inspection (22) est formé dans la partie plate (31).

6. Structure de clapet de refoulement selon la revendication 5, **caractérisée en ce que** l'orifice d'inspection (33) est un orifice d'insertion pour un élément d'inspection (50).

7. Structure de clapet de refoulement selon la revendication 5 ou 6, **caractérisée en ce que** la paroi de séparation (12) comporte un évidement (13) dans une région correspondant à l'orifice d'inspection (33).

8. Structure de clapet de refoulement selon l'une quelconque des revendications 5 à 7, **caractérisée en ce que** l'évidement (13) a une région correspondante plus grande que l'orifice d'inspection (33).
